# EUROPÄISCHE PATENTANMELDUNG

(11) **EP 1 435 644 A2**
(43) Veröffentlichungstag der Anmeldung: **07.07.2004**
(21) Anmeldenummer: 03023460.3
(22) Anmeldetag: 18.10.2003
(51) Int. Cl.: H01K 1/16, H01K 1/20, H01K 1/06, H01K 1/28, H01K 1/50, H01K 1/58, H01K 7/00, H01K 1/24, H05B 3/00, H05B 3/08, H05B 3/14, B32B 15/01

(54) **Infrarot-Strahler**

(30) Priorität: 11.12.2002 DE 10258099
(71) Anmelder: Heraeus Noblelight GmbH, 63450 Hanau (DE)
(72) Erfinder: Linow, Sven, Dr., 63450 Hanau (DE)
(74) Vertreter: Kühn, Hans-Christian

(57) **Zusammenfassung**

Die Erfindung betrifft einen Infrarot-Strahler (1) mit einem strahlungsdurchlässigen, gasdichten Hüllrohr (2) aus elektrisch isolierendem Werkstoff, in welchem ein Heizleiter (3) aus Carbonband angeordnet ist, welcher zwei Enden aufweist, die jeweils mit Hülsen (4a,4b) elektrisch und mechanisch verbunden sind, die aus Molybdän und/oder Wolfram und/oder Tantal gebildet sind, wobei die Hülsen (4a,4b) jeweils über Stromdurchführungen (8a,8b) mit aus dem Hüllrohr (2) ragenden elektrischen Anschlüssen (10a,10b) verbunden sind und wobei die beiden Enden des Heizleiters (3) jeweils durch ein Metall-Lot (6), welches mindestens eines der Metalle Titan, Zirkonium oder Hafnium enthält, mit einer der Hülsen (4a,4b) verbunden sind.

## Beschreibung

Die Erfindung betrifft einen Infrarot-Strahler mit einem strahlungsdurchlässigen, gasdichten Hüllrohr aus elektrisch isolierendem Werkstoff, in welchem ein Heizleiter aus Carbonband angeordnet ist, welcher zwei Enden aufweist, die jeweils mit Hülsen elektrisch und mechanisch verbunden sind, die aus Molybdän und/oder Wolfram und/oder Tantal gebildet sind, wobei die Hülsen jeweils über Stromdurchführungen mit aus dem Hüllrohr ragenden elektrischen Anschlüssen verbunden sind.

Derartige Infrarot-Strahler sind aus der DE 100 29 437 A1 bekannt. Insbesondere zeigen die dort abgebildeten Figuren 14 und 15 die Kontaktierung zwischen einem Carbonband und einer Hülse aus Molybdän, wobei das Carbonband eine Wendelform aufweist und die Hülse diese Carbonwendel innen und außen umgibt. Zwischen der Hülse und der Carbonwendel ist dabei Graphitpapier angeordnet. Dabei kann zwischen dem Graphitpapier und dem Carbonband eine Edelmetallpaste oder ein auf den Enden des Carbonbandes aufgebrachter metallischer Überzug, beispielsweise aus Nickel oder einem Edelmetall, angeordnet sein. Der metallische Überzug auf den Enden des Carbonbandes verhindert eine Degeneration des Kohlenstoff-Materials am Übergang zwischen Carbonband und Graphit. Bei dieser Art der Kontaktierung kommt es jedoch bei hohen Temperaturen im Betrieb des Carbonbandes zu einer Diffusion von Kohlenstoff aus dem Graphitpapier in das Molybdän der Hülse. Dies führt zur Bildung von Molybdänkarbid und damit bei Betriebstemperaturen des Carbonbandes wesentlich oberhalb 1300°C zu einer Versprödung oder einem Aufbrechen der Hülse, nachdem Molybdänkarbid einen höheren elektrischen Widerstand, eine anderes spezifisches Volumen sowie eine deutlich geringere Festigkeit im Hinblick auf Molybdän aufweist. Bereits nach einigen Stunden bis Wochen zerfällt - je nach Höhe der Carbonband-Temperatur - der gesamte Kontakt.

Die EP 0 881 858 A2 offenbart eine Infrarotstrahler mit einem Heizleiter aus Carbonfasem. Die Enden des Heizleiters sind mittels metallischer Anschlüsse elektrisch kontaktiert, wobei unter anderem Kontaktstreifen aus Molybdän in direktem Kontakt zum Heizleiter verwendet werden.

Der Heizleiter kann an seinen Enden eine metallische Beschichtung, beispielsweise aus Gold, aufweisen. Zwischen den Kontaktstreifen und dem Heizleiter kann weiterhin Graphitpapier angeordnet sein, das in direktem Kontakt zum Kontaktstreifen steht und somit wiederum zu einer Diffusion von Kohlenstoff aus dem Graphitpapier in das Molybdän und damit zur Bildung von Molybdänkarbid mit den bereits oben beschriebenen Problemen führt. Bei den dargestellten Verbindungen zwischen Kontaktstreifen und Heizleiter ist ersichtlich, dass jeweils lediglich eine punkt- beziehungsweise streifenförmige Anpressung des Kontaktstreifens an den Heizleiter erfolgt. Im Betrieb des Infrarotstrahlers entsteht in diesen Bereichen ein sehr hoher Stromfluss, der dort Temperaturen oberhalb 1100°C erzeugt und die Diffusion des Kohlenstoffs in das Molybdän beschleunigt. Die Verarmung des Heizleiters an Kohlenstoff führt zu einer punktuellen Widerstandserhöhung und einer weiteren Temperaturerhöhung, die den Abbrand des Heizleiters zur Folge hat.

Die DE 199 17 270 C2 offenbart einen Infrarotstrahler mit einem langgestreckten Carbonband, welches beidseitig über Kontaktplättchen kontaktiert ist.

Die EP 0 464 916 B1 offenbart einen hochtemperaturbeständigen Verbundkörper, bestehend aus mindestens einem Teil aus Molybdän oder einer Molybdänlegierung und mindestens einem Teil aus Graphit, die durch ein Zirkonlot miteinander verbunden sind. Zwischen dem Teil aus Molybdän oder der Molybdänlegierung und dem Zirkonlot ist eine zweilagige Zwischenschicht angeordnet, die aus einer Lage Vanadium und einer Lage aus einem der Elemente Wolfram, Tantal oder Niob gebildet ist.

Es ist Aufgabe der Erfindung, einen Infrarot-Strahler bereitzustellen, welcher bei Temperaturen des Carbonbandes von wesentlich oberhalb 1400°C eine langzeitbeständige Kontaktierung des Carbonbandes mit hervorragender elektrischer Leitfähigkeit und mechanischer Festigkeit gewährleistet.

Die Aufgabe wird dadurch gelöst, dass die beiden Enden des Heizleiters jeweils durch ein Metall-Lot, welches mindestens eines der Metalle Titan, Zirkonium oder Hafnium enthält, mit einer der Hülsen verbunden sind. Die Lötverbindung zwischen der Hülse und dem Carbonband bildet eine mechanische feste und elektrisch sehr gut leitende Verbindung, die hohen Temperaturen des Carbonbandes im Betrieb über lange Zeit standhält.
Unter einem Carbonband wird dabei ein Heizleiter verstanden, der folgendermaßen gebildet wird: Eine bandförmige Grundstruktur aus Kohlenstoff-Fasern wird mit einem Harz getränkt und einer Temperaturbehandlung unterzogen, die zu einer Umwandlung der Fasern und des Harzes in reinen Kohlenstoff führt. Die so behandelte Grundstruktur wird einer weiteren Temperaturbehandlung unterzogen, die bei Temperaturen erfolgt, die oberhalb der Betriebstemperatur des Carbonbandes im Infrarot-Strahler liegen. Dabei wird die Kristallstruktur der vorbehandelten Grundstruktur zu einem Carbonband mit graphit-ähnlicher Kristallstruktur umgewandelt, die allerdings im Gegensatz zu makroskopisch meist ungeordnet vorliegendem Graphit eine geordnete Faserstruktur mit entlang der Faser durchgehenden kovalenten Bindungen aufweist. Damit geht eine im Vergleich zu Graphit deutlich höhere Zugfestigkeit einher, die sich im Einsatz für langgestreckte Heizelemente in Infrarot-Strahlern als essentiell erweist. Auch der Ausdehnungskoeffizient des so gebildeten Carbonbandes ist geringer als der von Graphit parallel zur Schichtung und ist somit vorteilhaft für Heizleiter von Infrarot-Strahlern.
Im Gegensatz zu der bisher bekannten Kontaktierungslösung mittels Hülsen ist bei dem erfindungsgemäßen Infrarot-Strahler kein direkter Kontakt zwischen Hülsenmaterial und Carbonband vorhanden, so dass eine Versprödung der Hülsen durch Kohlenstoffeinlagerungen unterbunden wird.
Da das Carbonband und das Hüllrohr unterschiedliche thermische Ausdehnungskoeffizienten aufweisen und sich damit über den breiten Temperaturbereich zwischen Raumtemperatur und Betriebstemperatur deutlich unterschiedlich ausdehnen, wird das Carbonband üblicherweise über Federelemente vorgespannt und im Betrieb des Strahlers unter Spannung gehalten. Insbesondere bei großen Baulängen des Infrarotstrahlers entstehen dabei beträchtliche Zugkräfte, welchen die Kontaktbereiche mechanisch standhalten müssen. Dies ist bei der hier verwendeten Verlötung zwischen Carbonband und Hülse in idealer Weise der Fall.

Um bei Betriebstemperaturen der Lotverbindung oberhalb der Löslichkeitsgrenze von Kohlenstoff im Metall-Lot zu verhindem, dass Kohlenstoff in das Metall-Lot oder die Hülse wandert, hat es sich bewährt, wenn der Heizleiter an seinen beiden Enden jeweils mit einer Beschichtung versehen ist, die Platin und/oder Ruthenium und/oder Rhodium und/oder Palladium und/oder Osmium und/oder Iridium aufweist.

Insbesondere hat sich dabei bewährt, wenn die Beschichtung aus Platin, Palladium, Rhodium oder einer Legierung aus mindestens zwei dieser Metalle gebildet ist.
Maßgeblich für die Auswahl des Edelmetalls ist, dass die Löslichkeitsgrenze von Kohlenstoff im Edelmetall oberhalb der Betriebstemperatur der Lotverbindung liegt. So lässt sich mit Palladium eine Betriebstemperatur der Lotverbindung von 1300°C und mit Platin eine Betriebstemperatur der Lotverbindung von 1500°C erreichen, ohne dass es zu einem Transport von Kohlenstoff durch die Beschichtung aus Edelmetall kommt.

Weiterhin hat es sich bewährt, wenn die Hülsen zumindest auf ihren dem Metall-Lot zugewandten Oberflächen eine erste Kontaktschicht aufweisen, wobei die erste Kontaktschicht mindestens ein Metall der Gruppe Vanadium, Niob oder Tantal aufweist. Besonders bevorzugt ist es dabei, die erste Kontaktschicht aus Tantal zu bilden. Dabei kann die erste Kontaktschicht sowohl aus einem aufplattierten Tantalblech gebildet werden als auch durch das Aufbringen von einer Metallpaste. Auch gängige PVD- (physical vapour deposition) oder CVD- (chemical vapour deposition) Verfahren wie z.B. Sputtern oder Aufdampfen sind zur Bildung der ersten Kontaktschicht gut geeignet.

Weiterhin hat es sich bewährt, wenn die Hülsen eine auf die erste Kontaktschicht aufgebrachte zweite Kontaktschicht aufweisen, wobei die chemische Zusammensetzung der ersten Kontaktschicht unterschiedlich ist zu der der zweiten Kontaktschicht. Für die zweite Kontaktschicht hat es sich dabei bewährt, wenn diese mindestens ein Metall aus der Gruppe Vanadium, Niob, Tantal oder Wolfram aufweisen.

Als Metall-Lot hat sich aufgrund des hohen Schmelzpunktes insbesondere Zirkonium oder eine Zirkoniumlegierung bewährt.

Begrenzend für die Betriebstemperatur der Lotverbindung ist neben der bereits oben erläuterten Gefahr einer Kohlenstoffwanderung in das Metall-Lot weiterhin die Bildung von niedrig schmelzenden Eutektika zwischen dem Metall-Lot und dem Material der Hülse. Während die Carbidbildung eine schleichende Verschlechterung der Lotverbindung zur Folge hat, die sich begrenzend auf die Lebensdauer des Infrarot-Strahlers auswirkt, führt ein Überschreiten der Schmelztemperatur des Metall-Lotes bereits innerhalb der ersten Minuten des Betriebes des Infrarot-Strahlers zu einer Auflösung der Lotverbindung und stellt damit seine generelle Funktionsfähigkeit in Frage. So kann beispielsweise eine Betriebstemperatur der Lotverbindung von größer als 1400°C nicht erreicht werden, wenn eine Hülse aus Molybdän in direktem Kontakt zu einem Zirkoniumlot verwendet wird, da Zr - Mo - Verbindungen ein Eutektikum bei ca. 1400°C aufweisen.

Für die Hülsen hat es sich insbesondere bewährt, wenn diese aus Tantal gebildet sind. Eine Lotverbindung mit einer Hülse aus Tantal in direktem Kontakt zu einem Zirkoniumlot kann bei Betriebstemperaturen unterhalb 1650°C problemlos betrieben werden. Eine Lotverbindung mit einer Hülse aus Wolfram in direktem Kontakt zu einem Zirkoniumlot kann dagegen bei Betriebstemperaturen unterhalb 1550°C problemlos betrieben werden. Auch aufgrund des hohen spezifischen Gewichtes und der ungünstigeren Verarbeitungseigenschaften von Wolfram wird das Tantal diesem vorgezogen.

Für die Hülsen hat es sich weiterhin bewährt, wenn diese aus Molybdän gebildet sind und auf ihrer dem Carbonband zugewandten Oberfläche mit einer ersten Kontaktschicht aus Tantal oder Wolfram belegt sind. Dabei haben sich insbesondere Schichtdicken für die erste Kontaktschicht bewährt, die mindestens 0,1 mm betragen.

Das Hüllrohr für den erfindungsgemäßen Infrarot-Strahler ist vorzugsweise aus Kieselglas gebildet. Um die Haltbarkeit des Carbonbandes bei hohen Temperaturen über einen möglichst langen Zeitraum zu gewährleisten, hat es sich bewährt, das Hüllrohr mit einem Füllgas zu füllen. Dabei ist es bevorzugt, wenn der Gasdruck des Füllgases 650 bis 850 mbar (650 bis 850 hPa) beträgt. Insbesondere haben sich als Füllgase dabei die Edelgase bewährt. Bevorzugt ist der Einsatz von Edelgasen mit hohem spezifischem Gewicht, wie beispielsweise Xenon oder Krypton, um die Abdampfung von Kohlenstoff aus dem Carbonband gering zu halten. Dabei kann ein einzelnes oder mehrere Edelgase im Hüllrohr eingesetzt werden.

Für die Hülsen hat es sich insbesondere als günstig erwiesen, wenn diese so große Oberflächen aufweisen, dass sie im Betrieb des Infrarot-Strahlers mittels thermischer Abstrahlung und Konvektion kühlbar sind. Insbesondere bei sehr hohen Betriebstemperaturen des Heizleiters ist es erforderlich, die Temperatur an der Lötstelle so weit abzukühlen, dass es zu keinem Aufschmelzen des Metall-Lots kommt, das eine Auflösung des Kontakts und den Ausfall des Infrarot-Strahlers nach sich ziehen würde.

Die Figuren 1 bis 4 sollen den erfindungsgemäßen Infrarot-Strahler beispielhaft erläutern. So zeigt:
- Figur 1: eine vereinfachte Darstellung eines erfindungsgemäßen Infrarot-Strahlers
- Figur 2: einen Längsschnitt durch einen Bereich der Verbindung zwischen Hülse und Carbonband
- Figur 3: einen weiteren Längsschnitt durch einen Bereich der Verbindung zwischen Hülse und Carbonband
- Figur 4: einen Querschnitt durch den Bereich der Verbindung zwischen Hülse und Carbonband gemäß Figur 3

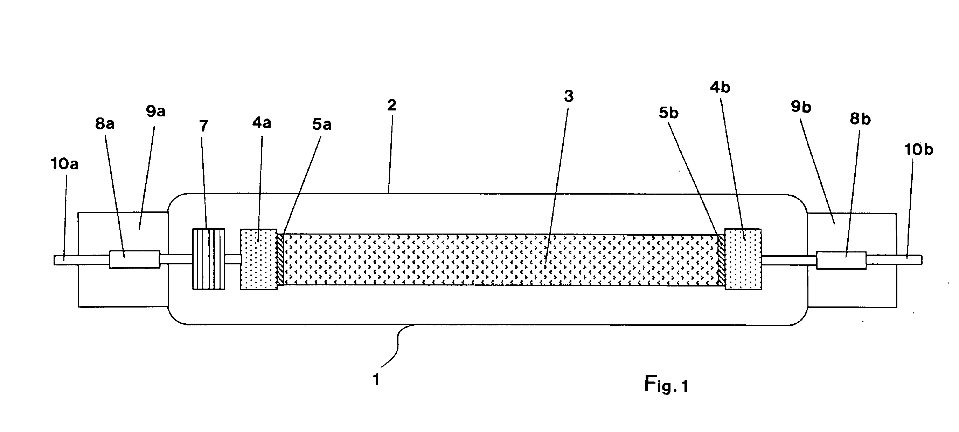

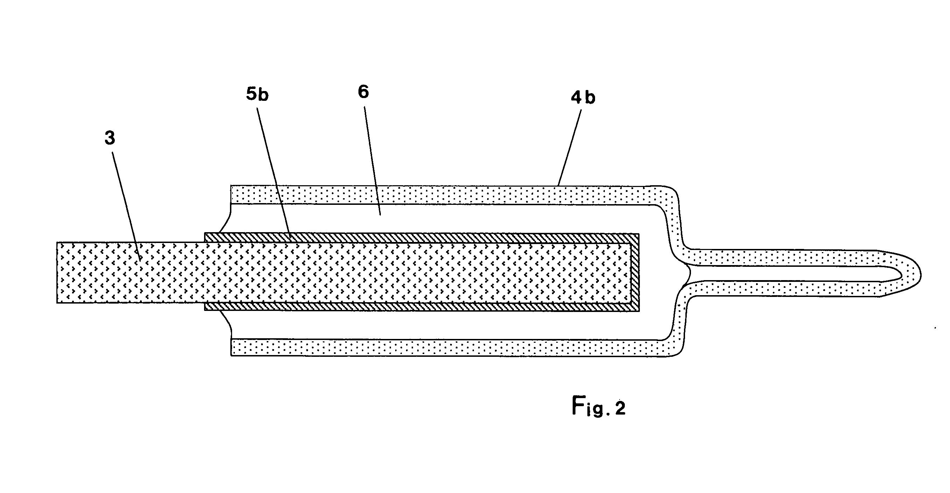

Figur 1 zeigt einen Infrarot-Strahler 1 mit einem strahlungsdurchlässigen, gasdichten Hüllrohr 2 aus Kieselglas. Innerhalb des Hüllrohres 2 ist ein Heizleiter 3 aus Carbonband angeordnet, welcher zwei Enden aufweist, die jeweils mit Hülsen 4a, 4b elektrisch und mechanisch fest verbunden sind. Die beiden Enden des Heizleiters 3 weisen hier jeweils eine Beschichtung 5a, 5b aus Edelmetall auf und sind - wie in Figur 2 erkennbar - mittels eines Metall-Lotes 6 mit den Hülsen 4a, 4b verlötet. Die Hülse 4a ist über ein Federelement 7 zum Ausgleich von thermisch bedingten Längenänderungen des Heizleiters 3 im Betrieb elektrisch mit einer Stromdurchführung 8a aus Molybdänfolie verbunden. Die Stromdurchführung 8a ist dabei in einer Quetschung 9a des Hüllrohres 3 gasdicht eingeschmolzen und elektrisch mit einem aus dem Hüllrohr 2 ragenden, elektrischen Anschluss 10a verbunden. Die Hülse 4b ist elektrisch direkt mit einer Stromdurchführung 8b aus Molybdänfolie verbunden. Die Stromdurchführung 8b ist dabei in einer Quetschung 9b des Hüllrohres 3 gasdicht eingeschmolzen und elektrisch mit einem aus dem Hüllrohr 2 ragenden, elektrischen Anschluss 10b verbunden.

Figur 2 zeigt einen möglichen Längsschnitt durch den Bereich der Verbindung zwischen Hülse 4b und Heizleiter 3. Der Heizleiter 3 weist hier eine Beschichtung 5b aus Platin auf und ist mittels eines Metall-Lotes 6 aus Zirkonium mit der Hülse 4b aus Tantal verlötet.

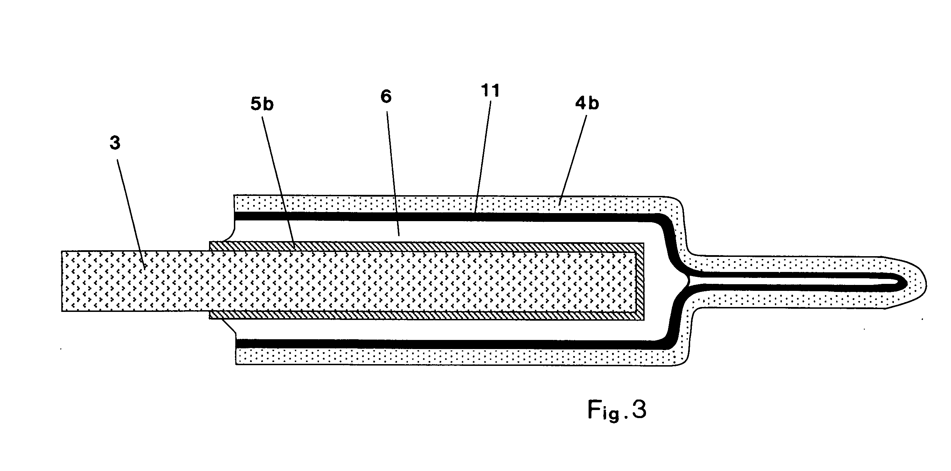

Figur 3 zeigt einen weiteren möglichen Längsschnitt durch den Bereich der Verbindung zwischen Hülse 4b und Heizleiter 3. Der Heizleiter 3 weist hier eine Beschichtung 5b aus Ruthenium auf und ist mittels eines Metall-Lotes 6 aus Zirkonium mit der Hülse 4b aus Molybdän verlötet, die eine erste Kontaktschicht 11 aus Tantalblech aufweist.

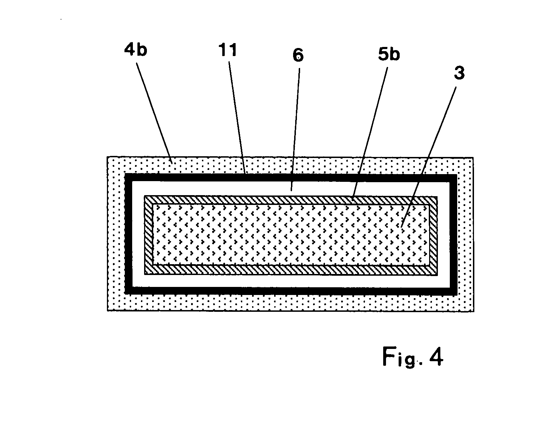

Figur 4 zeigt einen Querschnitt durch den Bereich der Verbindung zwischen Hülse 4b und Heizleiter 3 gemäß Figur 3. Dabei ist die Hülse 4b allseitig geschlossen ausgeführt, aber auch geschlitzte oder seitlich offene Hülsenvarianten können verwendet werden, soweit die Viskosität und die Oberflächenspannung des Metall-Lotes dies beim Aufschmelzen erlaubt.

## Patentansprüche

1. Infrarot-Strahler mit einem strahlungsdurchlässigen, gasdichten Hüllrohr aus elektrisch isolierendem Werkstoff, in welchem ein Heizleiter aus Carbonband angeordnet ist, welcher zwei Enden aufweist, die jeweils mit Hülsen elektrisch und mechanisch verbunden sind, wobei die Hülsen aus Molybdän und/oder Wolfram und/oder Tantal gebildet sind und jeweils über Stromdurchführungen mit aus dem Hüllrohr ragenden, elektrischen Anschlüssen verbunden sind, und wobei die beiden Enden des Heizleiters (3) jeweils durch ein Metall-Lot (6), welches mindestens eines der Metalle Titan, Zirkonium oder Hafnium enthält, mit einer der Hülsen (4a, 4b) verbunden sind.

2. Infrarot-Strahler nach Anspruch 1, **dadurch gekennzeichnet, dass** der Heizleiter (3) an seinen beiden Enden jeweils mit einer Beschichtung (5a, 5b) versehen ist, die Platin und/oder Ruthenium und/oder Rhodium und/oder Palladium und/oder Osmium und/oder Iridium aufweist.

3. Infrarot-Strahler nach Anspruch 2, **dadurch gekennzeichnet, dass** die Beschichtung (5a, 5b) aus Platin, Palladium, Rhodium oder einer Legierung aus mindestens zwei dieser Metalle gebildet ist.

4. Infrarot-Strahler nach einem der Ansprüche 1 bis 3, **dadurch gekennzeichnet, dass** die Hülsen (4a, 4b) zumindest auf ihren dem Metall-Lot (6) zugewandten Oberflächen eine erste Kontaktschicht (11) aufweisen, wobei die erste Kontaktschicht (11) mindestens ein Metall der Gruppe Vanadium, Niob oder Tantal aufweist.

5. Infrarot-Strahler nach Anspruch 4, **dadurch gekennzeichnet, dass** die erste Kontaktschicht (11) aus Tantal besteht.

6. Infrarot-Strahler nach einem der Ansprüche 4 bis 5, **dadurch gekennzeichnet, dass** die Hülsen (4a, 4b) eine auf die erste Kontaktschicht (11) aufgebrachte zweite Kontaktschicht aufweisen, wobei die chemische Zusammensetzung der ersten Kontaktschicht (11) unterschiedlich ist zu der der zweiten Kontaktschicht.

7. Infrarot-Strahler nach Anspruche 6, **dadurch gekennzeichnet, dass** die zweite Kontaktschicht mindestens ein Metall aus der Gruppe Vanadium, Niob, Tantal oder Wolfram aufweist.

8. Infrarot-Strahler nach einem der Ansprüche 1 bis 7, **dadurch gekennzeichnet, dass** das Metall-Lot (6) aus Zirkonium oder einer Zirkonium-Legierung besteht.

9. Infrarot-Strahler nach einem der Ansprüche 1 bis 8, **dadurch gekennzeichnet, dass** die Hülsen (4a, 4b) aus Tantal gebildet sind.

10. Infrarot-Strahler nach einem der Ansprüche 1 bis 8, **dadurch gekennzeichnet, dass** die Hülsen (4a, 4b) aus Molybdän gebildet sind und auf ihrer dem Carbonband (3) zugewandten Oberfläche mit einer ersten Kontaktschicht (11) aus Tantal oder Wolfram belegt sind.

11. Infrarot-Strahler nach einem der Ansprüche 1 bis 10, **dadurch gekennzeichnet, dass** die Stromdurchführungen (8a, 8b) aus Molybdän gebildet sind.

12. Infrarot-Strahler nach einem der Ansprüche 1 bis 11, **dadurch gekennzeichnet, dass** das Hüllrohr (2) aus Kieselglas gebildet ist.

13. Infrarot-Strahler nach einem der Ansprüche 1 bis 12, **dadurch gekennzeichnet, dass** das Hüllrohr (2) mit einem Füllgas gefüllt ist.

14. Infrarot-Strahler nach Anspruch 13, **dadurch gekennzeichnet, dass** der Gasdruck des Füllgases 650 bis 850 mbar (650 bis 850 hPa) beträgt.

15. Infrarot-Strahler nach einem der Ansprüche 13 bis 14, **dadurch gekennzeichnet, dass** das Füllgas aus mindestens einem Edelgas gebildet ist.

16. Infrarot-Strahler nach einem der Ansprüche 1 bis 15, **dadurch gekennzeichnet, dass** die Hülsen (4a, 4b) eine so große äußere Oberfläche aufweisen, dass sie im Betrieb des Infrarot-Strahlers (1) mittels thermischer Abstrahlung und Konvektion kühlbar sind.
